Europäisches Patentamt

European Patent Office

Office européen des brevets

Publication number: **0 341 887**

**A2**

# EUROPEAN PATENT APPLICATION

Application number: 89304430.5

Int. Cl.⁴ **G06F 5/06 , G06F 12/06**

Date of filing: 03.05.89

Priority: 07.05.88 JP 59808/88 U

Date of publication of application:
**15.11.89 Bulletin 89/46**

Designated Contracting States:
**DE FR GB**

Applicant: **BROTHER KOGYO KABUSHIKI KAISHA**
**35, 9-chome, Horita-dori Mizuho-ku**
**Nagoya-shi, Aichi-ken(JP)**

Inventor: **Hattori, Tomoaki c/o Brother Kogyo K.K.**
**35, Horita-dori 9-chome Mizuho-ku**
**Nagoya-shi Aichi-ken(JP)**

Representative: **Senior, Alan Murray et al**
**J.A. KEMP & CO 14 South Square Gray's Inn**
**London WC1R 5EU(GB)**

**Frame buffer memory device.**

In a frame buffer memory device utilizing a plurality of dual port memories, the data having been stored in each of the dual port memories are outputted as one raster data in address order.

The data to be outputted are read out from the memories in address order, thus the data are treated as one successive data without detect means for detecting the end or start of data regardless of the volume and are outputted.

## F I G . I

# Frame Buffer Memory Device

This invention relates to a frame buffer memory device utilizing a plurality of dual port memories, more particularly, having a function of outputting data in accordance with addresses corresponding to the memory areas where the data to be outputted have been stored.

Conventionally, dual-port type dynamic memories have been employed as memory devices in a frame buffer memory device of this character. An example of such memory devices is the μPD41264 (made by NEC Corporation), which comprises a RAM (Random Access Memory) port consisting of a memory cell array with 64 (K words) x 4 (bits) and a serial port capable of serially outputting data having been stored in a data register with 256 (words) x 4 (bits) configuration and an address of the RAM port corresponding to the linear addresses set on a data bus.

However, the prior art device as described above has been associated with a problem that the number of data in one raster is restricted by the number of columns in the memory device. If, for instance, four of the aforementioned μPD41264 are connected with a 16-bit data bus, the number of bits in one raster is 256 (words) x 16 (bits) which could not be enough for a high-resolution image in case that, for instance, the device is employed as an image data storage device.

If one raster is consecutively established across multiple columns the number of bits in one raster can certainly be increased. This solution however requires counting means such as a counter for detecting the end point of each of the columns so as to select a bit, for instance, at the second bank following the end bit at the first bank, resulting in a complicated circuit configuration.

## Summary of the Invention

It is therefore an object of the invention to provide a frame buffer memory device which is capable of generating one raster through a plurality of columns without requiring any means for detecting the end or start point of each of columns, by employing a plurality of dual port RAMs, and capable of outputting data in order of addresses corresponding to the areas at which the data to be outputted have been stored.

For this purpose, according to this invention, there is provided a frame buffer memory device having a plurality of storage units, each of said storage units respectively having an address and including memory areas whose memory capacity is a predetermined value, said frame buffer memory device comprising:
designate means for designating one of said storage units based upon the addresses;
output means for outputting data stored in said storage unit designated by said designate means and other storage units having succeeding addresses;
control means for controlling said output means so as to output the data in accordance with the addresses corresponding to the memory areas at which the data having been stored; and
conversion means for converting the configuration of the data outputted from said output means into serial data configuration.

The accompanying description and drawings are given by way of example only. In the drawings,
Fig. 1 is a block diagram illustrating an embodiment of the present invention;
Fig. 2 is a diagrammatic view of a frame buffer memory configuration according to the embodiment of the present invention; and
Fig. 3 is a diagrammatic view of one example of the raster data to be outputted from the frame buffer memory device according to the invention.

## Description of the Embodiments

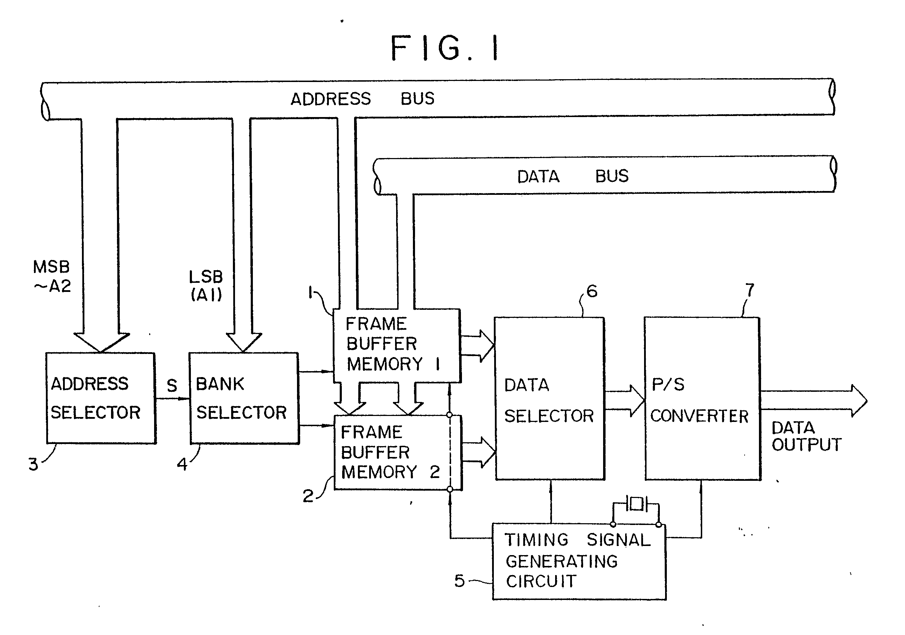

Fig. 1 is a block diagram showing the arrangement of a frame buffer memory device embodying the invention.

In this embodiment, there are provided frame buffer memories 1 and 2 each consisting of a plurality of dual port RAMs. The frame buffer memories 1 and 2 respectively provide first and second banks.

Address data A2 through the most significant bit (referred to as an "MSB" in this embodiment) from an address bus are, as shown in Fig. 1 sent to an address selector 3. If there is on the address bus an address data corresponding to the respective address of the frame buffer memories 1 and 2, the address selector 3 transmits a signal "S" to a bank selector 4. The bank selector 4 receives the signal from the address selector 3 as well as a data at the lowest significant bit (referred to as an "LSB" in this embodiment) of the address data of each of the frame buffer memories 1 and 2 to enable selection of one of the frame buffer memories 1 or 2. In other words, either the frame buffer memory 1 or 2 is selected by the signal "S" transmitted from the address selector 3 and the "LSB" data having been fed to the bank selector 4 from the address bus. Thus, one of the frame buffer memories 1 and 2 is alternately selected in dependence on the data at "LSB" and "S", and the desired data are read and written for the selected frame buffer memory through the data bus.

It is assumed, for instance, that an A1 signal (at LSB) of the address data is supplied to the bank selector 4 as a signal for switching the selected frame buffer memory between the memories 1 and 2 in case that using the MC 68000 (Made by Motorola Corporation) CPU (Central Processing Unit).

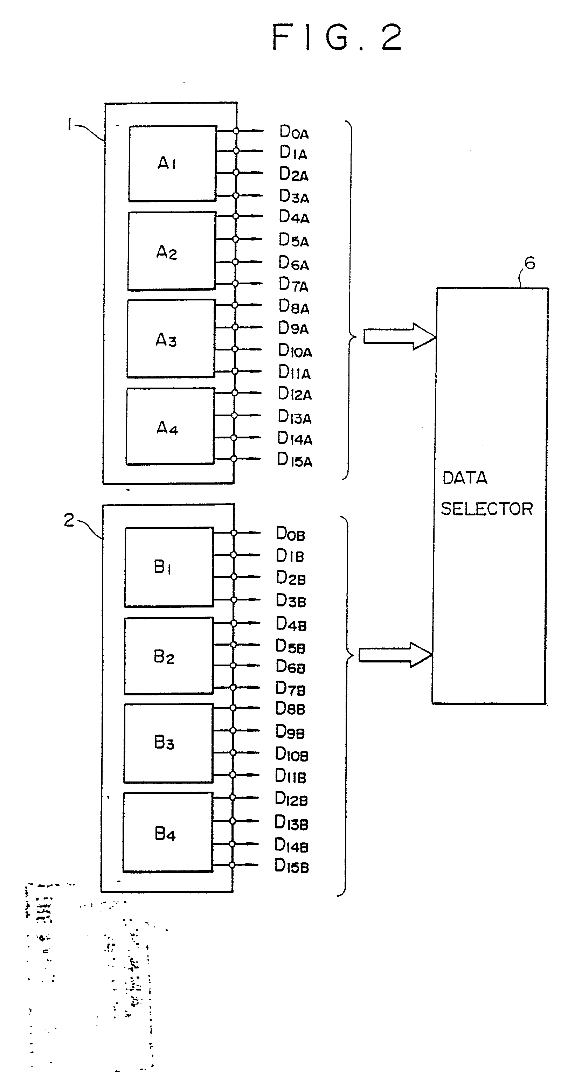

Frame buffer memories 1 and 2 are configured as diagrammatically shown in Fig. 2. As shown, the frame buffer memory 1 consists of four dual port memories A1, A2, A3 and A4 each having 1024 columns (256 (words) x 4 (bits)) and 256 columns (64 (K words) x 4 (bits)), while the frame buffer memory 2 consists of four dual port memories B1, B2, B3 and B4 each having a 64 (K words) x 4 (bits) configuration. Data buses from the frame buffer 1 are D0A through D3A, D4A through D7A, D8A through D11A, and D12A through D15A, while the data buses from the frame buffer 2 are D0B through D3B, D4B through D7B, D8B through D11B and D12B through D15B.

The data D0A through D15A and the data D0B through D15B read from the frame buffer memories 1 and 2 are transmitted to the data selector 6 at which the data read from one of them is selected. The data selected by the data selector 6 is converted to a serial data by means of a parallel/serial (P/S) converter 7 to be outputted as a raster data to the out of the frame buffer memory device.

A timing signal generating circuit 5 is driven by an imaging clock signal generated based upon the number of picture elements to produce a select signal for selecting one of the frame buffer memories 1 and 2 and the select signal is transmitted to a data selector 6, and the data transmitted from the selected frame buffer memory are outputted through the data selector 6, while the timing signal generating circuit 5 also generates a serial data access signal for reading a data from the serial ports of the frame buffer memories 1 and 2.

Furthermore, the timing signal generating circuit 5 sends a parallel/serial conversion signal in dependence on the picture clock signal transmitted to the parallel/serial converter 7, and the data outputted from the data selector 6 is outputted to the data bus as raster data.

According to one embodiment of the present invention configured as described above, one of the frame buffer memories 1 and 2 is selected in accordance with the LSB of the address data sent to the bank selector 4, provided that there exist address data of the frame buffer memories 1 and 2 on the address buses and the data stored in the selected frame buffer memory are primarily outputted.

Explanation is now given with reference to the example using the MC 68000 CPU mentioned above where one of the frame buffer memories 1 and 2 is selected in accordance with the A1 bit in the address data.

The addres data up to "MSB~A2 bit" is 4n (where n is a natural number). Further in the MC 68000 CPU generated are an upper data strobe ( $\overline{UDS}$ ) which specifies an even-number address and a lower data strobe ( $\overline{LDS}$ ) signal which specifies an odd-number address. When A1 bit is logical "0", therefore, the address data are 4n and (4n + 1). If the frame buffer memory selected is 1 and A1 bit is logical "1", the address data are (4n + 2) and (4n + 3), thus allowing the frame buffer memory 2 to be selected then. This process is diagrammatically represented in Table 1 shown below.

Table 1

| MSB~A2 | A1 | $\overline{UDS}$ | / | $\overline{LDS}$ | Address | frame buffer memory to be selected |
|--------|----|----|---|----|---------|------------------|
| 4n | 0 | "0" | | "1" | 4n | 1 |
| 4n | 0 | "1" | | "0" | 4n + 1 | 1 |
| 4n | 1 | "0" | | "1" | 4n + 2 | 2 |
| 4n | 1 | "1" | | "0" | 4n + 3 | 2 |

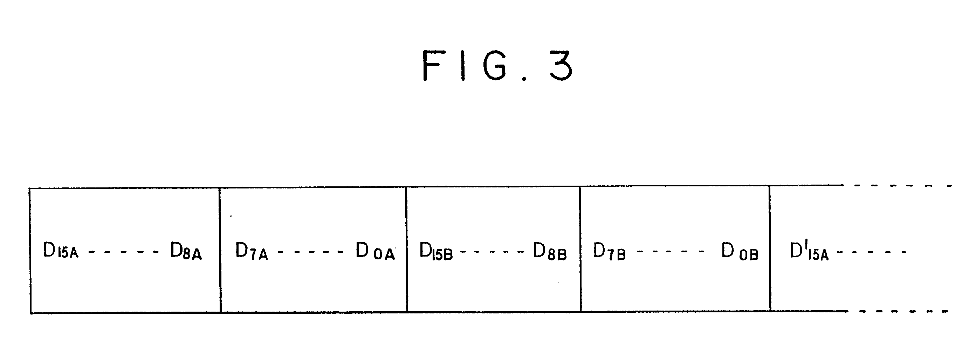

Thus, the data (D0A through D7A) and the data (D8A through D15A) are subsequently read from the frame buffer memory 1 and the data (D0B through D7B) and the data (D8B through D15B) are read from the frame buffer memory 2. The data (D0A through D15A) and the data (D0B through D15B) are thus alternately selected by the data selector 6. The 16-bits data selected by the data selector 6 is then converted to a serial data by means of a parallel/serial converter 7 to be delivered as an output. The sequence in which such data are generated as raster data is D15A ... D8A, D7A ... D0A, D15B ... D8B, D7B ... D0B, D15A ... as shown in Fig. 3.

As is readily seen in the foregoing description, the raster data is delivered from the frame buffer memories 1 and 2 alternately, so that the number of data in one raster can be increased without being restricted by the number of columns at the dual port memories A1 ... A4, B1 ... B4. Also, the addresses of the data constructing one raster data are regarded as consecutive in terms of the CPU.

As has been described above, according to the present invention, the memory areas of the frame buffer memory device is divided into more than one banks to allow selection of one out of such banks in accordance with the address data at a certain bit position corresponding to the number of banks. As a result, the data in one raster is constituted by the content of the consecutive banks of the frame buffer memory such as a storage data in the first bank of the frame buffer memory and a storage data in the consecutive second bank of the frame buffer memory. Thus, the number of data in one raster can be increased with no restriction of the number of columns in the frame buffer memory device. Moreover, there is no need of column end dtetecting means which has been required in conventional devices.

Furthermore, one raster data can be specified by consecutive addresses when accessed from the CPU, making bit mapping on the frame buffer memory easier to speed up the entire processing.

## Claims

1. A frame buffer memory device having a plurality of storage units, each of said storage units respectively having an address and including memory areas whose memory capacity is a predetermined value, said frame buffer memory device comprising:
designate means for designating one of said storage units based upon the addresses;
output means for outputting data stored in said storage unit designated by said designate means and other storage units having succeeding addresses;
control means for controlling said output means so as to output the data in accordance with the addresses corresponding to the memory areas at which the data having been stored; and
conversion means for converting the configuration of the data outputted from said output means into serial data configuration.

2. The frame buffer memory device according to claim 1 wherein each of said storage units comprises a plurality of dual port memories.

3. The frame buffer memory device according to claim 1 or 2 wherein said output means outputs data in 16-bits parallel configuration.

4 The frame buffer memory device according to claim 1, 2 or 3 wherein said predetermined value of said memory capacity is 64 (K words) x 16 (bits).

# FIG. 1

ADDRESS BUS

DATA BUS

MSB ~A2

LSB (AI)

ADDRESS SELECTOR 3

S

BANK SELECTOR 4

FRAME BUFFER MEMORY 1

FRAME BUFFER MEMORY 2

DATA SELECTOR 6

P/S CONVERTER 7

DATA OUTPUT

TIMING SIGNAL GENERATING CIRCUIT 5

EP 0 341 887 A2

# FIG. 2

# FIG. 3

EP 0 341 887 A2

| $D_{15A}$ ----- $D_{8A}$ | $D_{7A}$ ----- $D_{0A}$ | $D_{15B}$ ----- $D_{8B}$ | $D_{7B}$ ----- $D_{0B}$ | $D^{I}_{15A}$ - - - - |